# EUROPÄISCHE PATENTSCHRIFT

(11) **EP 2 576 307 B1**
(45) Veröffentlichungstag und Bekanntmachung des Hinweises auf die Patenterteilung: **12.07.2017**
(21) Anmeldenummer: 11719199.9
(22) Anmeldetag: 12.05.2011
(51) Int. Cl.: B60W 20/00, B60W 30/18, B60W 10/06, B60W 10/08, B60W 10/26

(54) **VERFAHREN ZUM BETREIBEN EINES FAHRZEUGS MIT VERBRENNUNGSKRAFTMASCHINE UND GENERATOR**
METHOD FOR OPERATING A VEHICLE WITH INTERNAL COMBUSTION ENGINE AND GENERATOR
PROCÉDÉ POUR FAIRE FONCTIONNER UN VÉHICULE ÉQUIPÉ D'UN MOTEUR À COMBUSTION INTERNE ET D'UN GÉNÉRATEUR

(30) Priorität: 29.05.2010 DE 102010022018
(43) Veröffentlichungstag der Anmeldung: 10.04.2013
(73) Patentinhaber: Audi AG, 85045 Ingolstadt (DE)
(72) Erfinder: BLASINSKI, Boris, 85049 Ingolstadt (DE); KASTENEDER, Rene, 85126 Münchsmünster (DE)
(74) Vertreter: Herbst, Matthias Heinz
(86) Internationale Anmeldenummer: PCT/EP2011/002343
(87) Internationale Veröffentlichungsnummer: WO 2011/151011

(56) Entgegenhaltungen:
- DE-A1-102005 044 268
- DE-A1-102008 042 228
- FR-A1- 2 935 123
- US-A1- 2004 060 751

## Beschreibung

Die Erfindung betrifft ein Verfahren zum Betreiben eines Fahrzeugs mit einer Verbrennungskraftmaschine mit einem Generator nach dem Oberbegriff des Patentanspruchs 1, wie es aus der DE 10 2008 008 238 A1 bekannt ist.

Bei Hybridfahrzeugen wird beim Betrieb der Verbrennungskraftmaschine der elektrische Antrieb mit umgekehrter Wirkung als Generator betrieben, damit elektrischer Strom gewonnen wird, mit dem eine Batterie geladen wird, die dann später genutzt wird, um den elektrischen Antrieb anzutreiben, sobald die Verbrennungskraftmaschine ausgeschaltet ist.

Das Gewinnen von elektrischem Strom erfolgt üblicherweise dadurch, dass durch die Verbrennungskraftmaschine ein zu dem eigentlichen, für die Fahrt des Kraftfahrzeugs zu nutzenden Drehmoment, hinzutretendes weiteres Drehmoment aufgebracht wird. Mit anderen Worten wird ein Teilmoment des beim Betrieb der Verbrennungskraftmaschine an einer Welle aufgebrachten Drehmoments zur Erzeugung von elektrischem Strom durch den Generator genutzt. Grundsätzlich ist es wünschenswert, dass möglichst wenig Kraftstoff für die Erzeugung des elektrischen Stroms verwendet wird. Daher gibt es bevorzugt einen ersten Modus, in dem das Teildrehmoment so festgelegt wird, dass der Wirkungsgrad auf einen optimalen (maximalen) Wert eingestellt ist. Der Wirkungsgrad wird als durch den elektrischen Strom bereitgestellte Arbeit pro Kraftstoffmenge definiert. Nun ist es aus der DE 10 2008 008 238 A1 bekannt, dass es mehr als eine Lade- oder Entladefunktion geben kann, die durch ein Steuergerät ausgewählt werden kann. Neben dem wirkungsgradgünstigen Betriebsbereich gibt es noch einen weiteren Betriebsbereich. Die Eingangsgröße, die diesen festlegt, ist eine aktuelle Differenz zwischen einer Soll-Beladung der Batterie des Hybrid-Fahrzeugs und deren Ist-Beladung. Die Beladung wird in Prozent bezüglich einer maximalen Kapazität angegeben.

Es gibt somit einen zweiten Modus neben dem ersten Modus, in dem der Wirkungsgrad auf einen (von dem maximalen Wert verschiedenen) weiteren Wert eingestellt ist. Bisher orientiert man sich nicht an dem Wirkungsgrad, sondern an der absoluten Leistung: der zweite Modus wird nämlich bevorzugt dann eingenommen, wenn die Batterie schnell geladen werden soll. Es kommt dann auf den absoluten Wert der geleisteten Arbeit an. Der Wirkungsgrad, also das Verhältnis dieser Arbeit zur benötigten Kraftstoffmenge, wird weniger beachtet.

Aus der FR 2 935 123 A ist ein Verfahren zum Betreiben eines Kraftfahrzeugs mit einem Verbrennungsmotor und einem Elektromotor bekannt, bei dem ein optimaler Wert für einen Kraftstoffverbrauch berechnet wird. Ein Laden oder Entladen einer Batterie wird so gewählt, dass ein Kraftstoffverbrauch minimiert wird, und für jeden Ladezustand wird jeweils ein optimaler Wert berechnet.

Die DE 10 2005 044 268 A beschreibt ein Ermitteln eines optimalen Werts einer Belastung eines Verbrennungsmotors und einer elektrischen Last in Abhängigkeit von einem Ladezustand einer Batterie.

Die US 2004/0060751 A beschreibt ein Einstellen eines Verbrennungsmotors, einer Getriebeübersetzung und eines Elektromotors derart, sodass soweit möglich ein optimaler Wirkungsgrad erreicht wird.

Naturgemäß ist es aber so, dass man auch dann, wenn die Batterie schneller beladen werden soll, verhältnismäßig wenig Kraftstoff verbrauchen sollte. Wenn man wie bisher lediglich das Teilmoment so festlegt, dass die bereitgestellte Leistung sehr gut ist, dann wird wegen des erhöhten Kraftstoffverbrauchs die Funktion, die das Hybridfahrzeug haben soll, unterminiert.

Es ist somit Aufgabe der Erfindung, einen Weg aufzuzeigen, wie das Erfordernis des Bereitstellens einer hohen elektrischen Leistung durch den Generator (insbesondere zum schnellen Laden einer Batterie) möglichst gut mit dem Erfordernis ins Gleichgewicht gebracht werden kann, dass wenig Kraftstoff verbraucht werden soll.

Die Aufgabe wird durch ein Verfahren mit den Merkmalen gemäß Patentanspruch 1 gelöst.

Erfindungsgemäß geht der weitere Wert, auf den der Wirkungsgrad in dem zweiten Modus eingestellt ist, durch Anwendung einer vorbestimmten Rechenvorschrift auf den maximalen Wert hervor.

Durch die Erfindung wird zunächst der Wirkungsgrad festgelegt, welcher sich als durch den elektrischen Strom bereitgestellte Energie pro von der Verbrennungskraftmaschine benötigten Menge an Kraftstoff bestimmt, und der Wirkungsgrad bestimmt das Teilmoment. Der Wirkungsgrad wird aufgrund einer Rechenvorschrift festgelegt. Es kann daher eine funktionale Abhängigkeit vom maximalen Wert gewählt werden, die je nach Kraftfahrzeug optimal ist.

Der Kehrwert des weiteren Werts weicht dabei für alle möglichen Lastpunkte um den selben vorbestimmten Prozentsatz von dem Kehrwert des maximalen Werts ab (naturgemäß nach oben hin abweicht).

Eine solch einfache Rechenvorschrift ermöglicht es, die Abweichung vom Wirkungsgrad vorab festzulegen. Man kann dann durch den Generator eine höhere Leistung bereitstellen; dies aber unter der Maßgabe, dass sich der Wirkungsgrad nicht über ein bestimmtes Maß hinaus ändert.

Als geeignete Werte werden Prozentsätze zwischen 1% und 10%, bevorzugt zwischen 2% und 7,5% und besonders bevorzugt zwischen 4% und 6% angesehen, die nach ihrer Auswahl dann jedes Mal angesetzt werden. Nimmt man z. B. als ausgewählten Prozentsatz 5%, so ändert sich der Wirkungsgrad nur in sehr geringem Maße. Der Wert von 5% kann aber andererseits so gewählt sein, dass Kurven, die den inversen Wirkungsgrad über das Teildrehmoment darstellen, sehr flach sind und daher ein sehr großes zusätzliches Teilmoment bereitstellbar ist, durch das vermehrt Leistung zur Verfügung steht.

Bei der Erfindung ist wie eingangs bereits ausgeführt, der Generator bevorzugt auch als elektrischer Antrieb betreibbar, und bevorzugt wird eben durch den von dem Generator bereitgestellten elektrischen Strom (zumindest zum Teil, was die bereitgestellte Leistung angeht) eine Batterie für den elektrischen Antrieb geladen.

Bevorzugt ist es so, dass der zweite Modus unter vorbestimmten Betriebsbedingungen automatisch eingenommen wird: so kann es sein, dass man die Verbrennungskraftmaschine bei einer Fahrt in einer städtischen Umgebung für besonders kurze Zeit betreiben möchte, und dann ist es vorteilhaft, wenn die Batterie schnell geladen wird. Das Kraftfahrzeug kann beispielsweise aufgrund eines Positionssignals, z. B. mit Hilfe des Global Positioning Systems, GPS, und einer Landkarte, feststellen, in welcher Umgebung es sich befindet.

Im Folgenden wird eine Ausführungsform der Erfindung unter Bezug auf die Zeichnung beschrieben, in der
- Fig. 1: eine schematische Draufsicht auf ein Hybridfahrzeug ist, bei dem das erfindungsgemäße Verfahren einsetzbar ist, und
- Fig. 2: zwei Graphen in einem Koordinatensystem veranschaulicht, anhand derer das erfindungsgemäße Verfahren nachfolgend beschrieben wird.

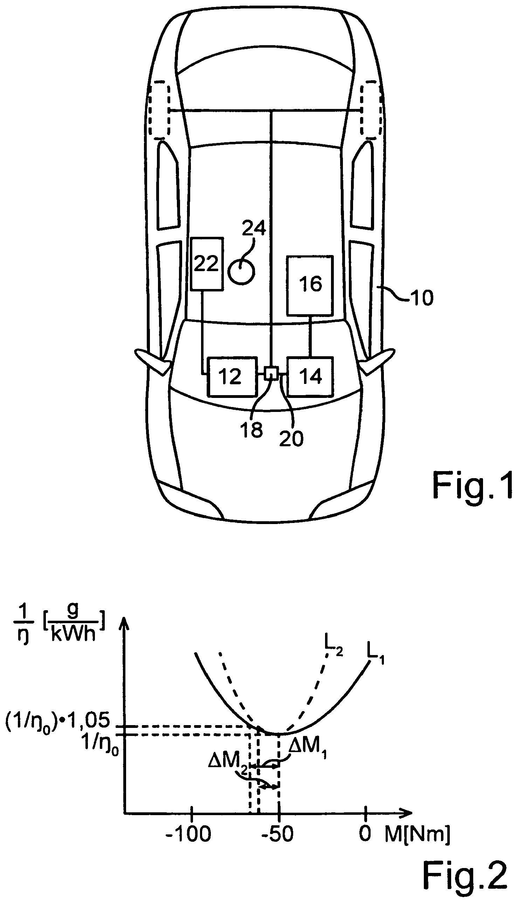

Ein im Ganzen mit 10 bezeichnetes Kraftfahrzeug weist eine Verbrennungskraftmaschine 12 und einen elektrischen Antrieb 14 auf, der auch als Generator betreibbar ist. Der elektrische Antrieb 14 wird aus einer Batterie 16 gespeist. Die Batterie 16 wird geladen, wenn der elektrische Antrieb 14 als Generator betrieben wird. Beim Laden kommt es zur sog. Lastpunktverschiebung, was die Verbrennungskraftmaschine 12 betrifft: Der herkömmliche Lastpunkt wird durch das an den Rädern des Kraftfahrzeugs aufzubringende Drehmoment bestimmt. Zu diesem Drehmoment tritt nun ein Drehmoment hinzu, das zur Erzeugung von elektrischem Strom ausgenutzt wird. Es wird also ein Anteil des Drehmoments über ein Getriebe 18 abgeleitet, ein anderer Teil des Drehmoments wird über eine Welle 20 dem als Generator arbeitenden elektrischen Antrieb 14 zugeführt. Die in der Batterie 16 bereitgestellte Energie kann man ins Verhältnis der Menge an benötigtem Kraftstoff setzen, wobei der Kraftstoff aus einem Kraftstofftank 22 der Verbrennungskraftmaschine 12 zugeführt wird. Dieses Verhältnis nennt man den Wirkungsgrad *η*. Dessen Kehrwert 1/*η* ist in Fig. 2 über das Drehmoment aufgezeichnet, das über die Welle 20 zugeführt wird. Das Vorzeichen des Drehmoments ist hierbei so gewählt, dass ein von dem elektrischen Antrieb 14 aufgebrachtes Drehmoment positiv ist. Somit sind die Werte für das Drehmoment von Fig. 2 grundsätzlich negativ, da die Graphen für den Fall gelten sollen, dass dem elektrischen Antrieb Drehmoment zugeführt wird.

Fig. 2 zeigt zwei Graphen, die mit L₁ und L₂ bezeichnet sind. Der Buchstabe "L" steht hierbei für einen Lastpunkt, L₁ und L₂ entsprechen unterschiedlichen Lastpunkten. Es geht hierbei um diejenigen Lastpunkte, die durch das an den Rädern des Kraftfahrzeugs 10 aufzubringende Drehmoment bestimmt sind. Die x-Achse gibt das Ausmaß der Lastpunktverschiebung wieder. Jeder Graph zeigt, wie sich der umgekehrte Wirkungsgrad in Abhängigkeit von der Lastpunktverschiebung bei einem bestimmten Lastpunkt ändert.

Das Kraftfahrzeug 10 soll nun, wenn die Batterie 16 durch den Generator 14 geladen wird, so betrieben werden, dass der Wirkungsgrad maximal ist, also dass der inverse Wirkungsgrad minimal ist. Der maximale Wirkungsgrad sei *η*₀ und stellt sich vorliegend bei einer Lastpunktverschiebung um 50 Nm ein. Nun kann es unter bestimmten Umständen sein, dass die Batterie 16 schneller geladen werden soll, z. B. wenn in einer städtischen Umgebung, die durch einen Positionssensor 24 im Kraftfahrzeug ermittelt wird, nur für kurze Zeit mit der Verbrennungskraftmaschine 12 gefahren werden soll und sodann nach Laden der Batterie 16 der elektrische Antrieb 14 verwendet werden soll. Vorliegend wird ein Kompromiss eingegangen, zwischen einem nicht ganz optimalen Wirkungsgrad und dem schnellen Laden. Es wird ein Wert für 1/*η* gesucht, der um das 1,05-fache höher liegt als der Wert 1/*η*₀. Dieser Wert bestimmt dann den Unterschied -Δ*M*₁ in der Lastpunktverschiebung: Es wird somit derjenige Lastpunkt gewählt, der eine Lastpunktverschiebung um -50-Δ*M*₁ entspricht. Diese Lastpunktverschiebung ist dergestalt, dass relativ schnell geladen wird, andererseits ist aber die Einbuße an Wirkungsgrad *η* nicht übermäßig hoch.

Für den zweiten Graphen L₂ gilt eine Lastpunktverschiebung von -Δ*M*₂ und ansonsten das oben Ausgeführte analog.

In Fig. 2 ist davon ausgegangen, dass die Minima in den Graphen L1 und L2 zusammenfallen. Dies muss nicht notwendigerweise der Fall sein. Bei der vorliegenden Erfindung wird die zusätzliche Lastpunktverschiebung, also die Erhöhung des von der Verbrennungskraftmaschine 12 aufzubringenden Teilmoments, bevorzugt anhand eines jeweiligen minimalen inversen Wirkungsgrades ermittelt.

Der Faktor von 1,05, der einer Erhöhung um 5% entspricht, kann für bestimmte Kurverischaren zu bestimmten Lastpunkten passend sein. Bei anderen Kraftfahrzeugmodellen kann sich ein anderer Faktor als passend erweisen. Grundsätzlich kann die Erhöhung um zwischen 1% und 10% liegen, der Faktor also zwischen 1,01 und 1,10.

## Patentansprüche

1. Verfahren zum Betreiben eines Fahrzeugs (10) mit einer Verbrennungskraftmaschine (12) und mit einem Generator (14), wobei beim Betrieb der Verbrennungskraftmaschine (12) ein Teilmoment des von dieser an einer Welle (20) aufgebrachten Drehmoments zur Erzeugung von elektrischem Strom durch den Generator (14) genutzt wird und wobei das Teilmoment in einem ersten Modus so festgelegt wird, dass ein Wirkungsgrad, welcher sich als durch den elektrischen Strom bereitgestellte Energie pro von der Verbrennungskraftmaschine (12) benötigter Menge an Kraftstoff bestimmt, auf einen maximalen Wert eingestellt wird, und in einem zweiten Modus so festgelegt wird, dass der Wirkungsgrad auf einen weiteren Wert eingestellt wird,
**dadurch gekennzeichnet, dass**
der Kehrwert des weiteren Werts um einen vorbestimmten Prozentsatz von dem Kehrwert des optimalen Werts abweicht.

2. Verfahren nach Anspruch 1,
**dadurch gekennzeichnet, dass**
der vorbestimmte Prozentsatz zwischen 1% und 10% liegt, bevorzugt zwischen 2% und 7,5% liegt und besonders bevorzugt zwischen 4% und 6% liegt.

3. Verfahren nach Anspruch 1,
**dadurch gekennzeichnet, dass**
der Generator (14) auch als elektrischer Antrieb (14) betreibbar ist.

4. Verfahren nach Anspruch 3,
**dadurch gekennzeichnet, dass**
mit dem elektrischen Strom zumindest teilweise eine Batterie (16) für den elektrischen Antrieb (14) geladen wird.

5. Verfahren nach einem der vorhergehenden Ansprüche,
**dadurch gekennzeichnet, dass** unter vorbestimmten Betriebsbedingungen automatisch der zweite Modus eingenommen wird.

## Claims

1. Method for operating a vehicle (10) with an internal combustion engine (12) and with a generator (14), wherein during operation of the internal combustion engine (12) a fractional torque of the torque applied by the latter to a shaft (20) is used for the generation of electrical current by the generator (14), and wherein the fractional torque is established in a first mode in such a way that an efficiency, which is determined as energy provided by the electrical current per amount of fuel required by the internal combustion engine (12), is adjusted to a maximum value, and in a second mode it is established in such a way that the efficiency is adjusted to a further value,
**characterised in that**
the inverse of the further value deviates by a predetermined percentage from the inverse of the optimum value.

2. Method according to Claim 1,
**characterised in that**
the predetermined percentage lies between 1% and 10%, preferably between 2% and 7.5%, particularly preferably between 4% and 6%.

3. Method according to Claim 1,
**characterised in that**
the generator (14) can also be operated as an electrical drive (14).

4. Method according to Claim 3,
**characterised in that**
a battery (16) for the electrical drive (14) is charged at least partially with the electrical current.

5. Method according to one of the preceding claims,
**characterised in that** the second mode is adopted automatically under predetermined operating conditions.

## Revendications

1. Procédé pour faire fonctionner un véhicule (10) avec un moteur à combustion interne (12) et avec un générateur (14), dans lequel, lors du fonctionnement du moteur à combustion interne (12), un moment partiel du couple appliqué par ledit moteur à combustion interne à un arbre (20) est utilisé par le générateur (14) pour produire un courant électrique et dans lequel le moment partiel est fixé dans un premier mode de telle sorte qu'un rendement, qui est déterminé comme l'énergie fournie par le courant électrique par quantité de carburant nécessaire au moteur à combustion interne (12), est réglé sur une valeur maximale et est fixé dans un deuxième mode de telle sorte que le rendement est réglé sur une autre valeur,
**caractérisé en ce que** l'inverse de l'autre valeur s'écarte d'un pourcentage prédéterminé de l'inverse de la valeur optimale.

2. Procédé selon la revendication 1, **caractérisé en ce que** le pourcentage prédéterminé est compris entre 1 % et 10 %, de préférence entre 2 % et 7,5% et particulièrement de préférence entre 4 % et 6 %.

3. Procédé selon la revendication 1, **caractérisé en ce que** le générateur (14) peut aussi fonctionner comme dispositif moteur électrique (14).

4. Procédé selon la revendication 3, **caractérisé en ce que**, avec le courant électrique, une batterie (16) destinée au dispositif moteur électrique (14) est chargée au moins partiellement.

5. Procédé selon l'une des revendications précédentes, **caractérisé en ce que**, dans certaines conditions de fonctionnement prédéterminées, le deuxième mode est utilisé automatiquement.
